# EUROPÄISCHE PATENTSCHRIFT

(11) **EP 2 292 468 B1**
(45) Veröffentlichungstag und Bekanntmachung des Hinweises auf die Patenterteilung: **09.05.2012**
(21) Anmeldenummer: 10466023.8
(22) Anmeldetag: 03.09.2010
(51) Int. Cl.: B60R 5/04

(54) **Mehrteiliger verschiebbarer Ladeboden**
Multi-section moveable loading floor
Surface de chargement en plusieurs parties et déplaçable

(30) Priorität: 04.09.2009 CZ 20090590
(43) Veröffentlichungstag der Anmeldung: 09.03.2011
(73) Patentinhaber: Skoda Auto A.S., 293 60 Mladá Boleslav (CZ)
(72) Erfinder: Kohlert, Zdenek, 54901 Nové Mesto nad Metuji (CZ)

(56) Entgegenhaltungen:
- DE-A1- 10 054 572
- DE-A1- 10 305 906
- DE-A1-102005 039 810
- DE-A1-102006 005 518
- DE-A1-102007 042 371

## Beschreibung

### Technisches Gebiet

Die Erfindung betrifft einen mehrteiligen verschiebbaren Ladeboden, insbesondere einen Ladeboden im Kofferraum eines Personenkraftfahrzeuges.

### Bisheriger Stand der Technik

Die Länge des Kofferraumes wird bei heutigen Personenkraftfahrzeugen ständig verlängert, deshalb werden verschiebbare Ladeböden eingesetzt, die enger als die Ladeöffnung sind und der Nutzer diese zu sich bzw. wenigstens teilweise über die Ladeöffnung herausziehen kann. Das Gepäck und die am Ladeboden abgelegten Gegenstände werden somit einfach in die Griffweite des Nutzers verschoben. Diese verschiebbaren Ladeböden werden entweder über die Ladekante angeordnet, wenn deren Verschiebungsweg ganz frei ist, oder im Gegenteil unter die Ladekante - in solchem Fall können sie angehoben werden, wenigstens im hinteren Teil, der in der Regel an den horizontalen Führungsflächen nur gelagert ist. In solchem Fall ist der verschiebbare Ladeboden auch leicht herausnehmbar. Für einfacheres Handling und die Platzeinsparung bei Lagerung kann der Ladeboden aus mehreren Bodenplatten bestehen, die gegenseitig schwenkbar verbunden sind.

Aus dem Stand der Technik ist die in DE 10054572 A1 beschriebene Lösung bekannt, nach der die Bodenplatte zwei Paaren seitlich des Kofferraumes in Bahnen sich bewegenden Laufrollen aufweist. Die Bahnen sind von der Horizontalfläche geneigt, wodurch die Bodenplatte bei Verschiebung nach hinten über die Ladekante angehoben wird.

Weiter ist die in DE 10 2005 039810 B4 beschriebene Lösung bekannt, nach der die Bodenplatte an Schienen verschiebbar ist und in eine senkrechte Position für die Aufteilung des Kofferraumes verschwenkt werden kann.

Weiter ist auch die Lösung nach DE 10 2007 042371 A1 bekannt, wo der Ladeboden durch zwei gegenseitig schwenkbar verbundene Platten gebildet ist, wobei die erste Platte mit ihrem vorderen Ende in einer Kurvenbahn befestigt und die zweite Platte mit einem Strebensatz abgestützt ist. Die Platten können einen bündigen Ladeboden oder eine den Kofferraum aufteilende Trennwand bilden.

DE 103 05 906 A1 veröffentlicht einen Ladeboden, gemäβ dem Oberbegriff des Anspruchs 1.

### Darstellung der Erfindung

Die Aufgabe wird durch den mehrteiligen ausbaubaren Ladeboden nach dieser Erfindung gelöst. Der Ladeboden ist in einer im Kofferraum angeordneten Führung verschiebbar und umfasst wenigstens zwei Bodenplatten, die schwenkbar mittels eines ersten Scharniers verbunden sind. Die erste Platte umfasst mindestens eine Sperrvorrichtung; die zwischen einer versperrten Position, in der die Sperrvorrichtung die erste Platte gegen Verschiebung in der Führung blockiert, und einer entsperrten Position, in der die Sperrvorrichtung die Verschiebung der ersten Platte in der Führung ermöglicht, verstellbar ist. Die Sperrvorrichtung wird mit einem Betätigungselement in Abhängigkeit von dem Schwenkwinkel der zweiten Platte gegenüber der ersten Platte verstellt. Dadurch wird die Sperrvorrichtung in Abhängigkeit von der gewählten Anordnung des Ladebodens automatisch entsperrt oder versperrt, ohne weiterer notwendigen Betätigung seitens des Nutzers.

Die Sperrvorrichtung befindet sich vorteilhaft bei einem Schwenkwinkel der Platten von 180° in der entsperrten Position und bei dem Schwenkwinkel 90° in der versperrten Position. Liegen die Platten also in einer Ebene und bilden einen bündigen Ladeboden, kann die erste Platte und somit auch der Ladeboden verschoben wird und so die Verschiebung der ersten Platte und eine Instabilität des Systems verhindert.

In einer vorteilhaften Ausführung ist die Sperrvorrichtung in dem hinteren Bereich der ersten Platte angeordnet und das Betätigungselement weist einen Druckknopf auf, der mit dem vorderen Ende der zweiten Platte korrespondiert. Der Druckknopf ragt in der versperrten Position der Sperrvorrichtung aus der Sperrvorrichtung mehr als in der entsperrten Position aus. Beim Umklappen der zweiten Platte in die Ebene mit der ersten Platte kommt es zum Kontakt des vorderen Ende der zweiten Platte mit dem Druckknopf, der herabgedrückt und somit die Sperrvorrichtung entsperrt wird. Der Druckknopf kann durch die vordere Stirnfläche oder auch die Rückseite der zweiten Platte im Bereich ihres vorderen Endes herabgedrückt werden.

Die Sperrvorrichtung wird in die versperrte Position vorteilhaft durch mindestens ein elastisches Element verstellt. Wird der Druckknopf entlastet, wird eine automatische Sicherung der ersten Platte gegen Verschiebung in geeigneter Position sichergestellt.

Die Sperrvorrichtung kann vorteilhaft auch vom Nutzer entsperrt werden, was die Verschiebung der ersten Bodenplatte auch bei einer heraufgeklappten bzw. bis auf die erste Platte umgeklappten zweiten Platte ermöglicht. Der Nutzer drückt z.B. den Druckknopf, der für den Kontakt mit dem ersten Ende der zweiten Platte bestimmt ist.

Das Betätigungselement kann in der parallel mit der Verschiebung der Platte verlaufenden Richtung verschiebbar sein, solche Lösung ist einfach und gewährt einen guten Kontakt des Druckknopfs mit dem festgelegten Bereich des vorderen Endes der zweiten Platte. Das Element kann jedoch auch z.B. um die senkrechte oder horizontale Schwenkachse schwenkbar oder ausklappbar sein.

Die Sperrvorrichtung kann einen ersten Zapfen aufweisen, der verschiebbar in der senkrechten Richtung zur Richtung der Verschiebung des Ladebodens ist und die Führung weist dann mindestens eine Aussparung für diesen ersten Zapfen auf. In der versperrten Position ragt dieser Zapfen in die Aussparung der Führung aus und verhindert so die Verschiebung der ersten Platte. Die Anzahl der Aussparungen und deren Abstände werden so gewählt, damit die Aussparungen insbesondere in den Endpositionen der Verschiebung der ersten Platte und geeignet zwischen diesen Positionen liegen. Deren Position bestimmt die Position der durch die aufwärts aufgeklappte zweite Platte gebildete Querwand im Kofferraum. Es ist offenbar, dass auch ein anderes Prinzip der Sicherung gegen die Verschiebung eingesetzt werden kann, z.B. durch Reibungs- statt Konturberührung, bei der unendlich viele Positionen der Verschiebung erreicht werden können, jedoch unter geringeren Festigkeit der Versperrung.

Die Führung kann horizontal eine erste Nut für den ersten Zapfen aufweisen, wobei die Aussparung für ihn in der Seitenwand ausgebildet ist. Bei Verschiebung des Ladebodens ist der Zapfen durch die Nut von unten sowie oben umschlossen und der Ladeboden wird bei einem eventuellen Fahrzeugüberschlag nicht in der Richtung zum Dach herausfallen.

Das Ende des ersten Zapfens der Sperrvorrichtung weist vorteilhaft eine Abschrägung auf und die Aussparungen dafür weisen entsprechende Schräge auf. In der entsperrten Position der Sperrvorrichtung ragt der erste Zapfen wenigstens teilweise in die Aussparung aus. Wird die Sperrvorrichtung mit einem elastischen Element in die Sperrposition verstellt, wird der Zapfen auch in der entsperrten Position in der Richtung zur Aussparung gedrückt, jedoch nur mit seiner Abschrägung. Die Verschiebung der ersten Platte durch den Nutzer wird ermöglicht, da der erste Zapfen mit seiner Abschrägung an der Abschrägung der Aussparung gegen die Wirkung des elastischen Elements aus der Aussparung herausgeschoben wird und er stützt sich weiter mit seinem Ende auf die Seitenwand der ersten Nut ab, bis er zur weiteren Aussparung verschoben wird. Dadurch werden dem Nutzer Signale über mögliche Positionen der ersten Platte übergeben, in der sie versperrt werden kann.

Die erste Platte kann in ihrem vorderen Bereich mindestens einen weiteren Zapfen aufweisen, die Führung weist dann horizontal eine zweite Nut für den zweiten Zapfen auf. Die erste Bodenplatte wird so bei Verschiebung im vorderen sowie hinteren Bereich geführt.

Weist die erste Nut in ihrem hinteren Teil eine vertikale Einlauföffnung für den ersten Zapfen und die zweite Nut in ihrem hinteren Teil eine vertikale Einlauföffnung für den zweiten Zapfen auf, kann die erste Platte bzw. der Ladeboden nach ihrer Verschiebung nach hinten zur Ladekante angehoben und aus dem Kofferraum herausgenommen werden. Ist für den ersten Zapfen auch in dieser Position der Verschiebung der ersten Platte eine Aussparung ausgebildet, wird nach Umklappen der zweiten Platte aufwärts die Sperrvorrichtung versperrt und der Nutzer muss sie manuell mit dem Druckknopf entsperren. Gleichzeitig wird das hintere Ende der ersten Platte aufwärts angehoben und der erste Zapfen fährt durch die vertikale Öffnung aus der ersten Führungsnut heraus. Für die Vereinfachung des Wiedereinbaues kann das Ende des ersten Zapfens ausreichend an seiner Unterseite so abgeschrägt werden, damit nach dem Einlegen der ersten Platte in die Führung diese Abschrägung an dem Rand der Einlauföffnung abgestützt und der Zapfen mit dem Eigengewicht des Ladebodens über den Widerstand des elastischen Elementes temporär in die entsperrte Position eingedrückt und automatisch in die erste Nut eingeschoben wird.

Um eine Verwechslung der Einlauföffnungen beider Nuten beim Einbau des Ladebodens zu vermeiden, ist der zweite Zapfen länger und/oder breiter als der erste Zapfen, wobei die Einlauföffnungen der ersten und zweiten Nut den unterschiedlichen Abmessungen entsprechen. Dadurch kann der zweite Zapfen nicht in die erste Nut eingeschoben werden. Der Unterschied der Abmessungen der Zapfen kann manchmal durch ausreichende Abschrägung der Unterseite des Endes des ersten Zapfens ersetzt werden - die Einlauföffnung in die erste Nut ist dann flacher ausgestaltet als der Länge des zweiten Zapfens entsprechen würde, der fest und ohne solche Abschrägung ist und deshalb in diese Öffnung nicht einschiebbar ist. Selbstverständlich können beide diese Arten der Vorbeugung eines verkehrten Einbaues kombiniert werden.

Die Sperrvorrichtung ist zu der ersten Bodenplatte vorteilhaft verschiebbar in senkrechter Richtung zur Verschiebungsrichtung des Ladebodens befestigt, wobei der Umfang deren Verschiebung eingeschränkt ist. Dadurch kann die Sperrvorrichtung in einem konstanten Abstand gegenüber der Führung sein, bzw. der Zapfen in einer konstanten axialen Entfernung gegenüber der Aussparung, auch bei fertigungsbedingten Ungenauigkeiten des Ladebodens oder des gesamten Kofferraumes, evtl. bei relativen Bewegung einzelner Bestandteile des Ladebodens und der Führung gegeneinander, insbesondere infolge der Torsion der Karosserie bei der Wagenfahrt. Eine der möglichen Lösungen ist, dass die Führung mindestens entlang der ersten Nut, an ihrer oberen Horizontalfläche eine dritte Längsnut aufweist, und dass die Sperrvorrichtung mindestens einen Vorsprung , mit der dritten Nut korrespondiert, aufweist. Bei Verschiebung der ersten Platte bewegt sich der Vorsprung in der dritten Nut und hält eine konstante Distanz der Sperrvorrichtung und der Führung ein.

Die dritte Nut kann sich von der Einlauföffnung der zweiten Nut in Richtung zur Einlauföffnung der ersten Nut erstrecken, wobei der zweite Zapfen an seiner Unterseite einen Vorsprung aufweist, der mit der dritten Nut korrespondiert. Bei Einbau des Ladebodens in den Kofferraum kann der Nutzer einfach den Ladeboden auf den horizontalen Teil der Führung auflegen und bei seiner Verschiebung wird der Vorsprung des zweiten Zapfens in der dritten Nut geführt, wodurch der zweite Zapfen direkt in die Einlauföffnung der zweiten Nut eingeführt wird.

Zur zweiten Platte kann mittels eines zweiten Scharniers schwenkbar eine dritte Platte befestigt werden, und die Führung kann mindestens eine vertikale Aussparung für das hintere Ende der dritten Platte aufweisen. Dadurch wird die Bildung einer Trennwand im Kofferraum ermöglicht, ohne eine zusätzliche Fixierung der zweiten Platte in ihrer ausgeklappten Position zur Seitenwänden des Kofferraumes zu benötigen. Bei der Bildung einer Trennwand wird die zweite Platte aufwärts um den ersten Scharnier und die dritte Platte wird nach unten um den zweiten Scharnier so ausgeklappt, dass die zweite und dritte Platte im zweiten Scharnier einen Spitzwinkel einschliessen und das hintere Ende der dritten Platte in die vertikale Aussparung eingelegt wird, womit diese in Horizontalrichtung fixiert wird. Durch das Gewicht der beiden aufgerichteten Platten liegt das Ende der dritten Platte in der Aussparung. Solche Trennwand kann zusätzlich gegen ihrem Umklappen beim intensiven Bremsen gesichert werden, z.B. mit einem an der Vorderseite der Aussparung ausgebildeten Vorsprung und dem entsprechende Aussparung an der Rückseite des Endes der dritten Platte - bei Verschiebung des hinteren Ende der dritten Platte nach vorne und oben infolge der trägen Kräfte bei der Verlangsamung verfängt sich der Vorsprung in der Aussparung und die Querwand schwenkt nicht um den ersten Scharnier nach vorne aus ihrer aufgerichteten Stellung aus. Nach einer Verschiebung der ersten Platte ganz nach vorne kann die zweite sowie dritte Platte in eine Ebene mit der ersten Platte umgeklappt werden, der Ladeboden wird dann durch die Oberseite aller drei Platten gebildet.

Die Führung kann eine Menge voneinander entfernten Aussparungen für den ersten Zapfen und gleiche Menge voneinander entfernten Aussparungen für das hintere Ende der dritten Platte aufweisen, so dass jeder versperrten Position der ersten Platte eine Position des hinteren Ende der dritten Platte entspricht und eine ausreichende aufgerichtete Position der gebildeten Querwand ermöglicht wird.

### Übersicht der Figuren der Zeichnungen

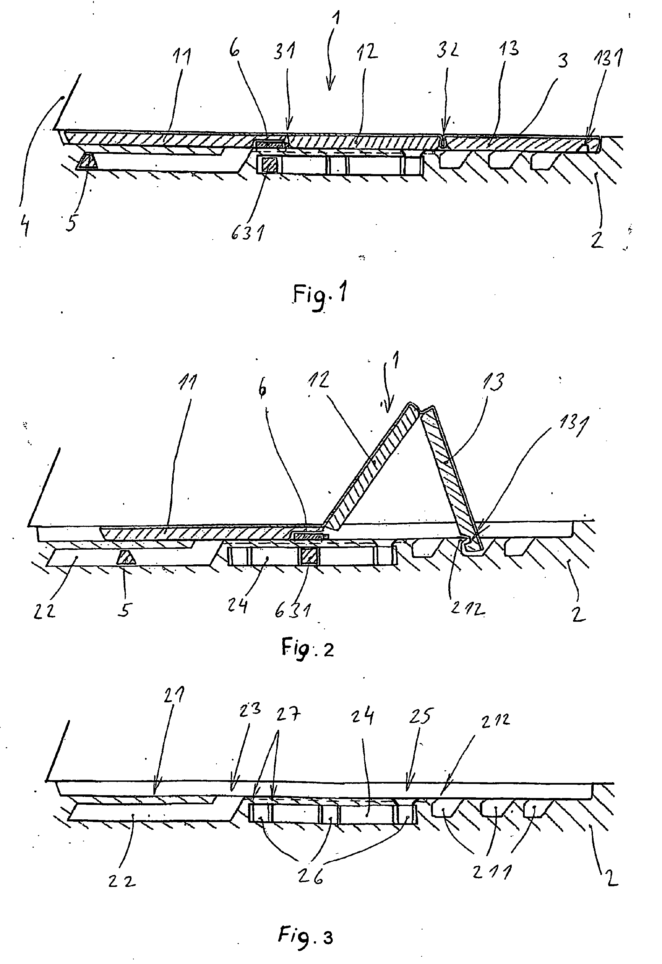

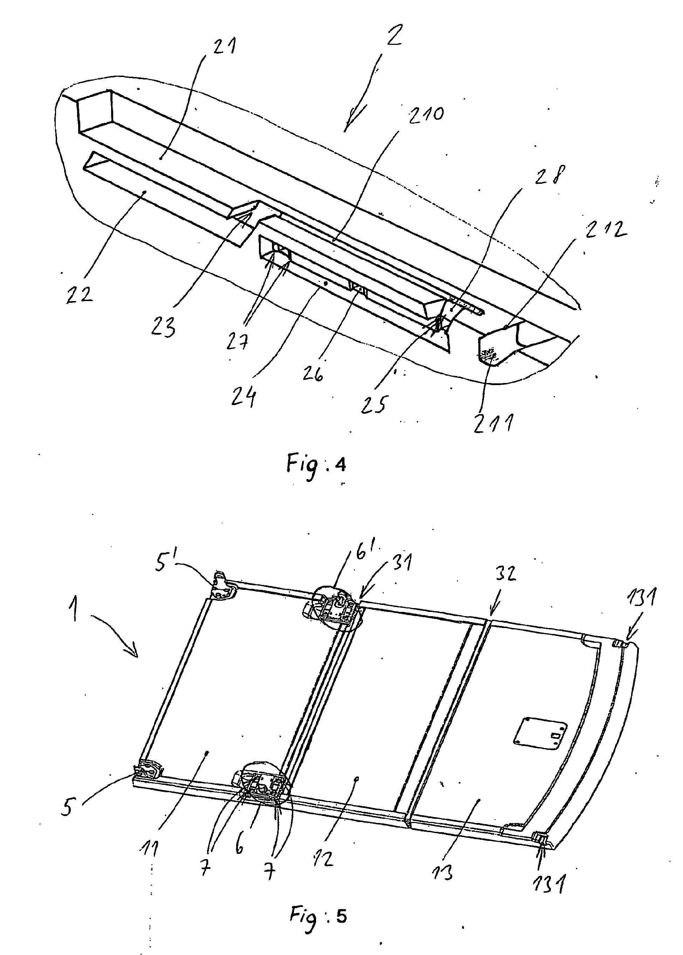

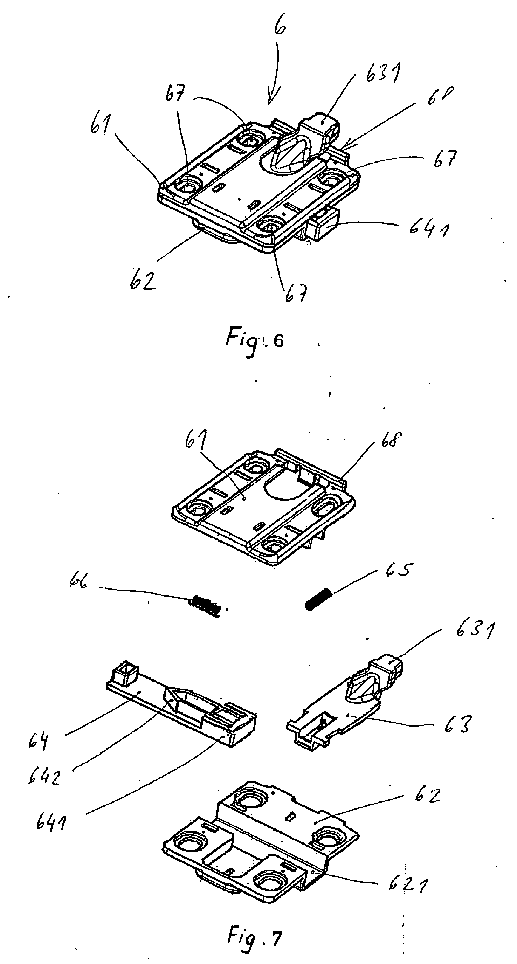

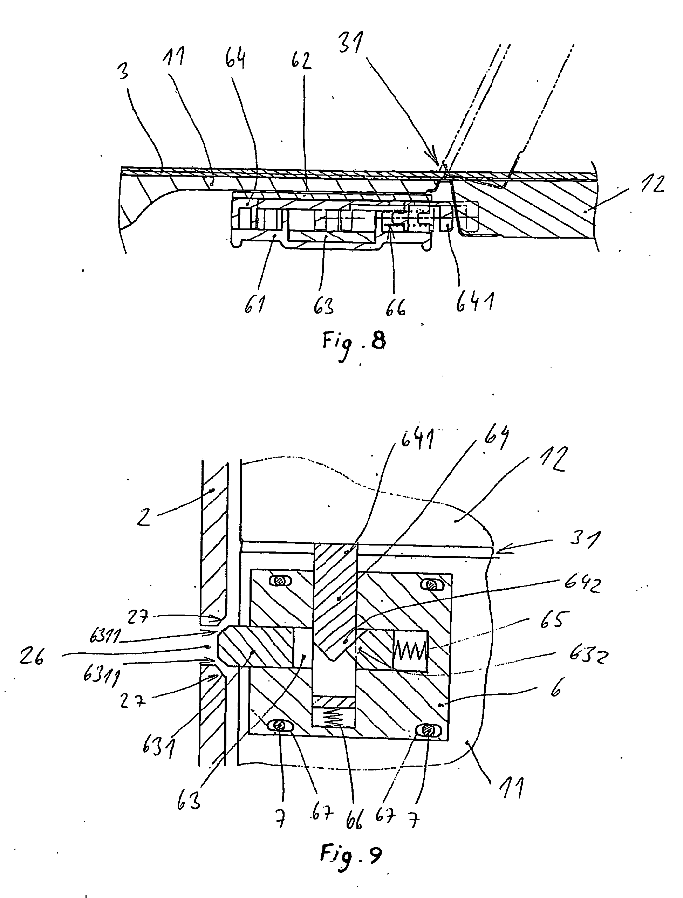

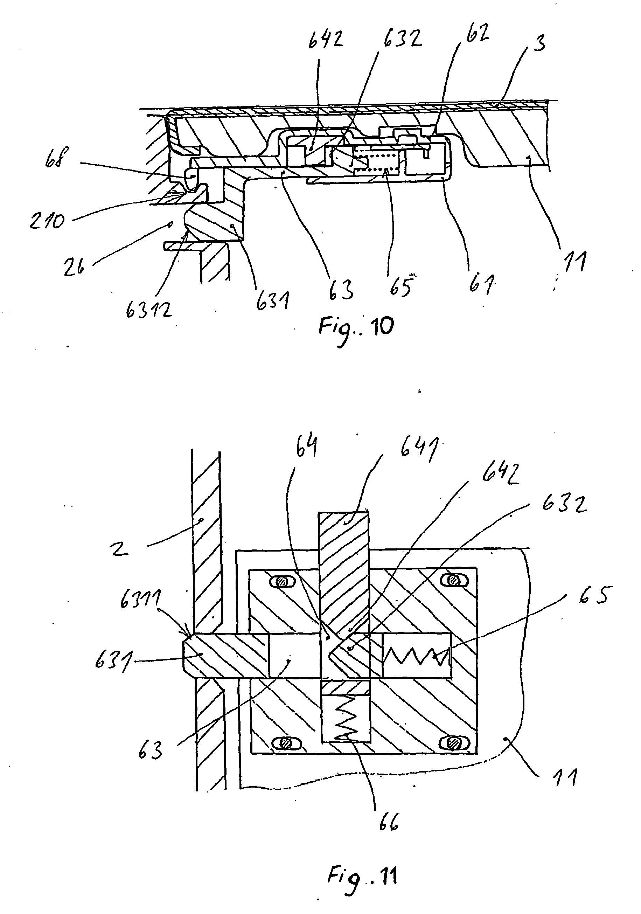

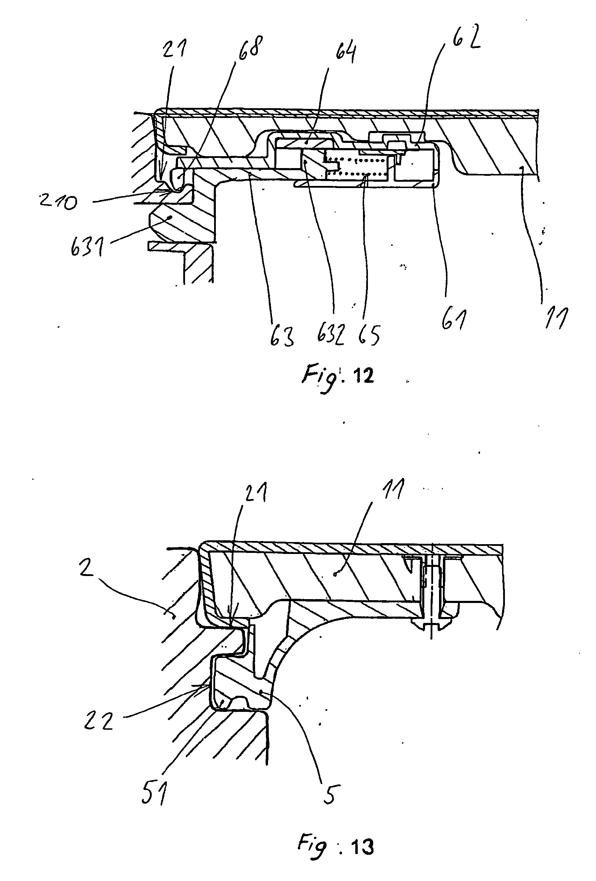

In der Fig. 1 bis 3 ist ein Längsschnitt des mehrteiligen verschiebbaren Ladebodens nach Erfindung in der Führung dargestellt, wobei die Fig. 1 seine Position in der horizontalen Grundposition, die Fig. 2 die gebildete Trennwand in einer Mittelposition der Verschiebung und die Fig. 3 nur die Führung ohne den ausgebauten Ladeboden darstellt, welche auch in einer Axonometrieansicht auch in der Fig. 4. Die Fig. 5 stellt die Gesamtansicht des ausgebauten Ladebodens von unten dar. Die Fig. 6 und 7 stellen die Sperrvorrichtung im zusammengebauten Zustand bzw. ihre Einzelteile dar. Die Fig. 8 stellt den vertikalen Längsschnitt des Ladebodens im Bereich der Sperrvorrichtung dar. Die Fig. 9 und 11 stellen dann schematisch den horizontalen Schnitt und die Fig. 10 und 12 den vertikalen Querschnitt des Ladebodens in diesem Bereich dar, wobei die Fig. 9 und 10 die Sperrvorrichtung in der entsperrten Position und die Fig. 11 und 12 in der versperrten Position abbilden. Die Fig. 13 stellt den vertikalen Querschnitt des Ladebodens im Bereich des zweiten Zapfens dar, der in der zweiten Nut eingeschoben ist.

### Ausführungsbeispiel der Erfindung

In den beigefügten Abbildungen ist das Beispiel einer der möglichen Ausführungen der Erfindung dargestellt. Die Fig. 1 stellt ein Längsschnitt des mehrteiligen verschiebbaren Ladebodens nach Erfindung dar. Der Ladeboden **1** besteht aus drei Bodenplatten, die mit einem gemeinsamen Teppich **3** bezogen sind, der die Verbundbänder für die Möglichkeit der Ausschwenkung einzelner Platten gegeneinander bildet. Zwischen der ersten Platte **11** und der zweiten Platte **12** ist der erste Scharnier **31,** und zwischen der zweiten Platte **12** und dritten Platte **13** ist der zweite Scharnier **32.** Die Schwenkachse des ersten Scharniers **31** liegt im Bereich der Oberseite der Platten **11** und **12,** während die Schwenkachse des zweiten Scharniers **32** im Bereich der Rückseiten der Platten **12** und **13** liegt, so dass alle drei Platten zueinander zusammengestellt werden können. Die dritte Platte **13** weist im hinteren Teil einen näher nicht abgebildeten Griff für die Handhabung auf. Der Kofferraum ist vorne durch die Hintersitzlehnen **4** und an der gegenüberliegenden Seite durch nicht abgebildete Ladekante begrenzt.

Der Ladeboden **1** liegt in der Führung, die einen linken Teil **2'** und rechten Teil **2** aufweist, die in der seitlichen Kofferraumverkleidung ausgebildet sind und den Ladeboden an gegenüberliegenden parallel mit der Fahrzeuglängsachse verlaufenden Seiten abstützen.

Zu der vorderen Platte **1** ist von ihrer Rückseite im Bereich des vorderen Endes ein Zapfenpaar **5**', **5** und im Bereich des hinteren Endes ein Paar der Sperrvorrichtungen **6**',**6** angeschraubt, wie aus Fig. 5. Beide Zapfen **5**', **5,** auch die Sperrvorrichtungen **6**',**6,** sowie der linke Teil **2'** und der rechte Teil **2** der Führung, sind spiegelsymmetrisch, deshalb wird im weiteren Text nur eine Seite beschrieben.

In der Führung **2** ist eine Horizontalfläche **21** für die Abstützung der Bodenplatten **1** ausgebildet. In dem vorderen Teil ist in der Führung **2** unter der Horizontalfläche **21** eine horizontale Nut **22** ausgebildet, die in ihrem hinteren Teil schräg aufwärts durch die Einlauföffnung **23** ausläuft. Hinter der Nut **22** ist in der Führung **2** eine weitere horizontale Nut **24** ausgebildet, die in ihrem hinteren Bereich eine Einlauföffnung **25** aufweist. Die Einlauföffnung **25** weist eine Abschrägung **28** auf. An der Seite der Nut **24** sind drei Aussparungen **26** ausgebildet, wobei je eine im Bereich des Anfangs und des Endes der Nut **24** und eine dazwischen angeordnet ist. Die senkrechten Kanten der Aussparung **26** weisen eine Abschrägung **27** auf. Die Länge der Nut **22** und der Nut **24** ist im Grunde identisch. Die Tiefe der Nut **22** sowie der Einlauföffnung **23** ist größer als die Tiefe der Nut **24** und seiner Einlauföffnung **25.** Zwischen den Einlauföffnungen **23** und **25** ist in der Horizontalfläche eine vertikale Längsnut **210** ausgebildet.

Hinter der Nut **24** sind in der Verkleidung **2** in der Horizontalfläche **21** drei vertikale Aussparungen **211** ausgebildet, die im vorderen Teil einen Vorsprung **212** aufweisen. In der Fig. 6 und 7 stellen die Sperrvorrichtung **6** dar, welche einen Unterteil **61** und Oberteil **62** umfasst. Im Unterteil **61** ist eine leitende Gleitführung **611** und im Oberteil **62** senkrecht zu dieser andere Gleitführung **621** ausgebildet. In der Führung **611** ist verschiebbar ein Halter **63** und in der Führung **621** ein Betätigungselement **64** gelagert. Der Halter weist am Ende einen Zapfen **631** aus, der über die Öffnung im Unterteil **61** hinausragt und über den seitlichen Rand der Sperrvorrichtung **6** hinausläuft. Der Zapfen **631** hat einen quadratischen Querschnitt und sein Ende weist an den vertikalen Kanten die Abschrägung **633** und an horizontalen Kanten die Abschrägung **634** auf. In der Führung **621** ist verschiebbar ein Betätigungselement **64** gelagert, der am Ende einen Druckknopf **641** aufweist, der über den hinteren Rand der Sperrvorrichtung **6** hinausragt. Das Betätigungselement **64** weist an seiner dem Halter **63** zugewandte Unterseite einen Keil **642** auf und der Halter **63** weist auf seiner Oberseite ein übereinstimmendes Keil **632** auf. Die Keile **642** und **632** sind als beiderseitig ausgestaltet, mit zwei Keilflächen, wobei im Kontakt mit dem Gegenstück immer nur eine von Beiden ist. Dadurch kann gleicher Halter **63** sowie gleiches Betätigungselement **64** für die linke und rechte Sperrvorrichtung verwendet werden. Offensichtlich kann einer oder beide der Bauteile nur einseitige Keilflächen aufweisen, falls ein anderer Bauteil für linke und rechte Seite benötigt wird, z.B. wegen der Desachsierung des Zapfens **631** gegenüber dem Halter **63**.

Der Unterteil **61** und Oberteil **62** sind miteinander mittels Klipps verbunden und weisen vier Öffnungen **67** für die Befestigung mit Schrauben 7 zur Rückseite der ersten Platte **11** auf. Die Öffnungen **67** sind in der parallelen Richtung mit der Gleitführung **611** des Halters **63** längs verzogen und die Sperrvorrichtung **6** kann sich so im Rahmen des Spielraums der Schrauben **7** in diesen Öffnungen bewegen. Am Innenrand der Rückseite des Oberteils **61** ist ein länglicher Vorsprung **68,** der senkrecht zur Führung **611** ist und mit der Nut **210** in der horizontalen Fläche **21** korrespondiert. Die Sperrvorrichtung **6** ist zur ersten Platte 11 von ihrer Rückseite in ihrer hinteren Ecke so angeschraubt, dass der Druckknopf **641** über ihre hintere Kante überragt. Die erste Platte **11** wird an der Stelle der Befestigung der Sperrvorrichtung **6** von unten dünner gemacht, so dass die Sperrvorrichtung fast nicht unter ihre Rückseite hinausragt und der Druckknopf **641** über ihrer Rückseite und so auch über der Rückseite der zweiten Platte **12** in ihrer horizontaler Position liegt.

Der Halter **63** mit dem Zapfen **631** wird durch eine Feder **65** aus der Sperrvorrichtung über die Seitenkante der ersten Platte **11** in die Führung **2** verdrängt und das Betätigungselement **64** wird durch eine Feder **66** aus der Sperrvorrichtung **6** nach hinten über die hintere Kante der ersten Platte **11** zur zweiten Platte **12** gedrückt. Dank der Feder **65** und **66** sind die Keile **642** und **632** ständig im Kontakt.

In der Fig. 8 wird ein vertikaler Längsschnitt des Ladebodens **1** im Bereich der Sperrvorrichtung **6** dargestellt, die in der entsperrten Position ist, mit Strichpunktlinie ist die versperrte Position bei hochgeklappten zweiten Platte **12** dargestellt. In der horizontalen Position der Platte **12** ist die Bewegung des Druckknopfes **641** nach hinten durch deren vorderes Ende **121** begrenzt. Wie aus der schematischen Darstellung in Fig. 9 hervorgeht, wird der Keil **642** des Betätigungselementes **64** in Eingriff mit dem Keil **632** des Halters **63** verschoben, der von der Führung **2** abgedrückt wird und der Zapfen **631** greift nur teilweise mit seiner Abschrägung **633** in die Aussparung **26** ein.

Bei Ausschwenkung der zweiten Platte **12** aufwärts um das Scharnier **31** entfernt sich ihr vorderes Ende **121** von der Sperrvorrichtung **6**. Der Druckknopf **641** ist zuerst mit ihm im Kontakt, die Sperrvorrichtung **64** verschiebt sich durch die Feder **66** nach hinten, der Keil **642** fährt aus dem Eingriff mit dem Keil **632** aus und der Zapfen **631** verschiebt sich infolge der Einwirkung der Feder **65** auf den Halter **63** in die Aussparung **26** in die versperrte Position. Die versperrte Position der Sperrvorrichtung **6** ist schematisch in der Fig. 11 dargestellt - die Verschiebung des Druckknopfes **641** nach hinten ist durch das vordere Ende **121** der zweiten Platte **12** nicht begrenzt, das Betätigungselement **64** ist ganz nach hinten und der Halter **63** ganz zur Seite verschoben, so dass der Zapfen **631** in der Aussparung **26** eingeschoben ist. Damit ist die Verschiebung der ersten Platte **11** gegenüber der Führung **2** versperrt.

Die Sperrvorrichtung **6** ist so eingestellt, damit bei kleinem Schwenkwinkel der zweiten Platte **12**, die für die Anhebung der dritten Platte **13** über die Ladekante notwendig ist, noch nicht zu ihrer Versperrung kommt. Damit wird die Verschiebung der ersten Platte **11** in der Führung **2** und somit auch ein Teilherausschieben des Hinterteils des Ladebodens aus dem Fahrzeug und die rückwärtige Verschiebung in die vordere Endstellung ermöglicht. Bei solcher Teilausschwenkung ragt der Zapfen **631** nur mit seiner Abschrägung **633** in die Aussparung **26** aus, die seiner Abschrägung **27** entspricht. Da der Zapfen **631** in den Eingriff nur durch die Feder **65** geschoben wird, setzen bei Verschiebung der ersten Platte **11** die Abschrägung **633** des Zapfens und die Abschrägung **27** der Aussparung aufeinander und der Zapfen fährt gegen den Widerstand der Feder **65** aus dem Eingriff in der Aussparung **26** aus. Dadurch hat der Nutzer bei Verschiebung eine Übersicht darüber, in welcher Stellungen die erste Platte **11** gegen Verschiebung versperrt werden kann. In Abhängigkeit von dem geforderten Schwenkwinkel der zweiten Platte **12**, bei dem die Versperrung der Sperrvorrichtung **6** erfolgt, und von der Schräge der Keile **632** und **642** ist es möglich, dass in der horizontalen Stellung der zweiten Platte **12** der Zapfen **631** nicht mal mit seiner Abschrägung **633** in die Aussparung **26** hinausragt, sondern er wird erst nach einer Teilausschwenkung der zweiten Platte **12** aufwärts teilweise eingeschoben.

Bei Verschiebung der ersten Platte **11** in der Führung **2**, in dem durch die Länge der Nuten **22** und **24** abgegrenzten Bereich, schiebt sich der Vorsprung **68** der Sperrvorrichtung **6** in die Nut **210** in der Horizontalfläche **21** ein. Dadurch wird eine konstante Entfernung des Zapfens **631** von der Aussparung **26** im ganzen Bereich der Verschiebung der ersten Platte **11** sichergestellt, unabhängig von den fertigungsbedingten Ungenauigkeiten oder der Torsion des Fahrzeuges bei der Fahrt, bei der sich die Entfernung der linken und rechten Verkleidung des Kofferraumes verändert. Dies wird durch eine Schublagerung der Sperrvorrichtung **6** ermöglicht, die in der senkrechten Richtung zur Verschiebungsrichtung des Ladebodens **1** sich im Rahmen des Spielraumes der Schrauben **7** in den Langöffnungen **67** verschieben kann.

Dank der Anzahl der Aussparungen **26** in der Nut **24** kann die erste Platte **11** in eine vom Nutzer geforderten Position verschoben werden. In dieser Position wird mit der Ausschwenkung der zweiten Platte **12** aufwärts die erste Platte **11** gegen Verschiebung automatisch versperrt. Durch nachfolgende Ausschwenkung der dritten Platte nach unten um den zweiten Scharnier **32** und die Einschiebung ihres Endes in die Aussparung **211** in der Horizontalfläche entsteht eine den Kofferraum aufteilende Querwand. Die Stabilität der Querwand ist durch die Versperrung der ersten Platte **11** gegen Verschiebung und durch die Form der Aussparung **211** sichergestellt, in der die dritte Platte **13** durch Eigengewicht liegt. In dieser Position schiebt sich der Vorsprung **212** der Horizontalfläche **21** in die Aussparung **131** an der Rückseite des Endes der dritten Platte **13** ein, so dass beim starken Bremsen nicht zur Ausschwenkung der Querwand um den ersten Scharnier **31** aufwärts infolge der trägen Kräfte und zu derer Zerlegung kommen kann.

Die Anzahl der Aussparungen **211** wird meistens identisch mit der Anzahl der Aussparungen **26** gewählt, damit in jeder Schubstellung der ersten Platte **11** im Grunde eine gleiche Entfernung zwischen dem ersten Scharnier **31** und der Aussparung **211** und dadurch eine ausreichend aufgerichtete Form der Querwand sichergestellt wird.

Wird eine horizontale Position des Ladebodens gefordert, hebt der Nutzer das Ende der dritten Platte **13** aus der Aussparung **211** an und durch Ziehen nach hinten wird die zweite Platte **12** um Scharnier **31** in die Horizontalstellung verschwenkt. Das vordere Ende **121** der zweiten Platte **12** setzt auf den Druckknopf **641** auf, drückt diesen herunter und entsperrt so die Sperrvorrichtung **6.** Die erste Platte **11** kann ganz nach vorne verschoben werden und die zweite Platte **12** und die dritte Platte **13** mit den Rückseiten auf die Horizontalfläche **21**auflegen.

Wird die Herausnahme des Ladebodens **1** aus dem Fahrzeug gefordert, hebt der Nutzer die dritte Platte **13** an und durch Ziehen wird die erste Platte **11** bis auf Anschlag nach hinten verschoben. Danach legt er durch Verschwenkung um die Scharniere **31** und **32** die zweite Platte **12** und die dritte Platte **13** auf die erste Platte **11** hin. Der Nutzer drückt den Druckknopf **641** und verschwenkt das hintere Ende der ersten Platte **11** aufwärts, wodurch der Zapfen **631** durch die Öffnung **25** aus der Nut 24ausfährt. Durch weiteres Ziehen der ersten Platte **11** nach hinten führt der Zapfen **5** durch die Einlauföffnung **23** aus der Nut **22** aus und der Ladeboden **1** kann herausgenommen werden. In dieser Position kann der Nutzer nach dem Drücken der Knöpfe **641** den zusammengelegten Ladeboden **1** auch ganz nach vorne schieben und so den hinteren Bereich des Kofferraumes für den Transport größerer Gegenstände frei machen.

Beim Wiedereinbau des zusammengelegten Ladebodens **1** ins Fahrzeug legt der Nutzer den zusammengelegten Ladeboden **1** mit seinen Zapfen **5** auf die Horizontalfläche **21** im Bereich vor den Aussparungen **211** auf. Danach schiebt er ihm nach vorne, bis die Zapfen **631** über die Einlauföffnungen **25** der Nut **24** verschoben werden. In dieser Position laufen die Zapfen **5** durch die Einlauföffnungen **23** in die Nut **22** ein. Beim Hinlegen des hinteren Endes des Ladebodens **1** nach unten setzen die Abschrägungen **634** an den Unterseiten der Zapfen **631** auf die entsprechende Abschrägungen **28** der Einlauföffnungen **25** auf und gleiten über diese ab, wodurch die Zapfen **631** selbsttätig gegen den Widerstand der Feder **65** in entsperrte Position verschoben werden. Nach dem Einlauf der Zapfen **631** in der Nut **24** verschoben sich die Zapfen **631** wieder durch die Kraft der Feder **65** in die direkt unter den Einlauföffnungen **25** angeordneten Aussparungen **26**, womit die Sperrvorrichtung **6** versperrt wird. Es kann die oben beschriebene Ausschwenkung der zweiten Platte **12** und der dritten Platte **13** in die Horizontalposition, die Verschiebung des Ladebodens nach vorne und sein Auflegen auf die Horizontalflächen **21** folgen.

Der Zapfen **5** weist an seiner Unterseite einen Vorsprung **5** auf, der bei Verschiebung in die Nut **210** in der Horizontalfläche **21** einläuft und den Zapfen in die Einlauföffnung **23** der Nut **22** einführt. Die Einlauföffnung **23** für den Zapfen **5** ist breiter als die Einlauföffnung **25,** dadurch kann der Zapfen **5** beim unkorrekten Einbau nicht in die Nut **24** einlaufen.

Die im Text angeführten Richtungen und Ebenen entsprechen den üblich geltenden Begriffen bei der Fahrzeugbeschreibung, als Vorderteil des Ladebodens wird der dem Fahrzeugvorderteil näherliegende Teil bzw. der Ladeöffnung abgewandte Teil gemeint.

### Industrielle Nutzbarkeit

Ein erfindungsgemäßer mehrteiliger verschiebbarer Ladeboden kann bei allen Fahrzeugen mit einem Kofferraum oder Laderaum eingesetzt werden.

## Patentansprüche

1. Mehrteiliger verschiebbarer Ladeboden, insbesondere ein Ladeboden im Kofferraum eines Personenkraftfahrzeuges, der in einer im Kofferraum angeordneten Führung (2, 2') verschiebbar ist und der wenigstens zwei Bodenplatten (11, 12) umfasst, die schwenkbar mittels eines ersten Scharniers (31) verbunden sind, **dadurch gekennzeichnet, dass** die erste Platte (11) mindestens eine Sperrvorrichtung (6) aufweist, die zwischen einer versperrten Position, in der die Sperrvorrichtung (6) die erste Platte (11) gegen Verschiebung in der Führung (2, 2') blockiert, und einer entsperrten Position, in der die Sperrvorrichtung (6) die Verschiebung der ersten Platte in der Führung (2, 2') ermöglicht, verstellbar ist, wobei die Sperrvorrichtung (6) durch ein Betätigungselement (64) in Abhängigkeit von dem Schwenkwinkel der zweiten Platte (12) gegenüber der ersten Platte (11) verstellt ist.

2. Mehrteiliger verschiebbarer Ladeboden nach Anspruch 1, **dadurch gekennzeichnet, dass** bei einem Schwenkwinkel von 180° die Sperrvorrichtung (6) in einer entsperrten Position und bei einem Schwenkwinkel 90° in der versperrten Position ist.

3. Mehrteiliger verschiebbarer Ladeboden nach Anspruch 1 oder 2, **dadurch gekennzeichnet, dass** die Sperrvorrichtung (6) in dem hinteren Bereich der ersten Platte (11) angeordnet ist, und dass das Betätigungselement (64) einen Druckknopf (641) aufweist, der mit dem vorderen Ende (121) der zweiten Platte (12) korrespondiert, wobei der Druckknopf (641) in der versperrten Position der Sperrvorrichtung (6) aus der Sperrvorrichtung (6) mehr als in der entsperrten Position hinausragt.

4. Mehrteiliger verschiebbarer Ladeboden nach einem der vorherigen Ansprüche, **dadurch gekennzeichnet, dass** die Sperrvorrichtung (6) durch mindestens ein elastisches Element (65) in die versperrte Position verstellt wird.

5. Mehrteiliger verschiebbarer Ladeboden nach einem der vorherigen Ansprüche, **dadurch gekennzeichnet, dass** die Sperrvorrichtung (6) vom Nutzer entsperrt werden kann.

6. Mehrteiliger verschiebbarer Ladeboden nach einem der vorherigen Ansprüche, **dadurch gekennzeichnet, dass** das Betätigungselement (64) in einer, parallel mit der Verschiebung des Ladebodens (1) verlaufenden, Richtung verschiebbar ist.

7. Mehrteiliger verschiebbarer Ladeboden nach einem der vorherigen Ansprüche, **dadurch gekennzeichnet, dass** die Sperrvorrichtung (6) einen ersten Zapfen (631) aufweist, der verschiebbar in der senkrechten Richtung zur Richtung der Verschiebung des Ladebodens (1) ist, und dass die Führung (2, 2') mindestens eine Aussparung (26) für den ersten Zapfen (631) aufweist.

8. Mehrteiliger verschiebbarer Ladeboden nach Anspruch 7, **dadurch gekennzeichnet, dass** die Führung (2, 2') eine horizontale erste Nut (24) für den ersten Zapfen (631) aufweist, wobei die Aussparung (26) in derer Seitenwand ausgebildet ist.

9. Mehrteiliger verschiebbarer Ladeboden nach einen der Ansprüche 7 oder 8, **dadurch gekennzeichnet, dass** das Ende des ersten Zapfens (631) der Sperrvorrichtung eine Abschrägung (633) aufweist, und dass die Aussparung (26) eine entsprechende Schräge (27) aufweist, wobei in der entsperrten Position der Sperrvorrichtung (6) der erste Zapfen (631) wenigstens teilweise in die Aussparung (26) hinausragt.

10. Mehrteiliger verschiebbarer Ladeboden nach einem der vorherigen Ansprüche, **dadurch gekennzeichnet, dass** die erste Platte (11) in ihrem vorderen Bereich mindestens einen zweiten Zapfen (5) aufweist, und dass die Führung (2, 2') horizontal eine zweite Nut (22) für den zweiten Zapfen (5) aufweist.

11. Mehrteiliger verschiebbarer Ladeboden nach der Ansprüche 8 und 10, **dadurch gekennzeichnet, dass** die erste Nut (24) in ihrem hinteren Teil eine vertikale Einlauföffnung (25) für den ersten Zapfen (631), und die zweite Nut (22) in ihrem hinteren Teil eine vertikale Einlauföffnung (23) für den zweiten Zapfen (5) aufweist, wobei der zweite Zapfen (5) eine größere Länge und/oder Breite als der erste Zapfen (631) aufweist, und dass die Einlauföffnungen (23, 25) der ersten und zweiten Nut diesen unterschiedlichen Abmessungen entsprechen.

12. Mehrteiliger verschiebbarer Ladeboden nach einem der vorherigen Ansprüche, **dadurch gekennzeichnet, dass** die Sperrvorrichtung (6) zu der ersten Bodenplatte (11) verschiebbar in senkrechter Richtung zur Verschiebungsrichtung des Ladebodens (1) befestigt ist, wobei der Umfang deren Verschiebung eingeschränkt ist, und wobei die Führung (2, 2') mindestens entlang der ersten Nut (24), an ihrer oberen Horizontalfläche (21) eine dritte Längsnut (210) aufweist, und dass die Sperrvorrichtung (6) mindestens einen Vorsprung (68), der mit der dritten Nut (210) korrespondiert, aufweist.

13. Mehrteiliger verschiebbarer Ladeboden nach Anspruch 12, **dadurch gekennzeichnet, dass** die dritte Nut (210) sich von der Einlauföffnung (23) der zweiten Nut (22) in Richtung zur Einlauföffnung (25) der ersten Nut (24) erstreckt, wobei der zweite Zapfen (5) an seiner Unterseite einen Vorsprung (51) aufweist, der mit der dritten Nut (210) korrespondiert.

14. Mehrteiliger verschiebbarer Ladeboden nach einem der vorherigen Ansprüche, **dadurch gekennzeichnet, dass** zur zweiten Platte (12) mittels eines Scharniers (32) schwenkbar eine dritte Platte (13) befestigt ist, und dass die Führung (2, 2') mindestens eine vertikale Aussparung (211) für das hintere Ende der dritten Platte (13) aufweist.

15. Mehrteiliger verschiebbarer Ladeboden nach Anspruch 14, **dadurch gekennzeichnet, dass** die Führung (2, 2') eine Anzahl von voneinander entfernten Aussparungen (26) für den ersten Zapfen (631) und gleiche Anzahl voneinander entfernten Aussparungen (211) für das hintere Ende der dritten Platte (13) aufweist.

## Claims

1. Multi-section movable loading floor, in particular a loading floor in the boot compartment of a passenger motor vehicle, which loading floor is movable in a guide (2, 2') arranged in the boot compartment and which comprises at least two floor panels (11, 12) which are connected pivotably by means of a first hinge (31), **characterized in that** the first panel (11) has at least one locking device (6) which can be displaced between a locked position, in which the locking device (6) blocks the first panel (11) against movement in the guide (2, 2'), and an unlocked position, in which the locking device (6) permits movement of the first panel in the guide (2, 2'), the locking device (6) being displaced by an actuating element (64) depending on the pivoting angle of the second panel (12) in relation to the first panel (11).

2. Multi-section movable loading floor according to Claim 1, **characterized in that**, at a pivoting angle of 180°, the locking device (6) is in an unlocked position and, at a 90° pivoting angle, is in the locked position.

3. Multi-section movable loading floor according to Claim 1 or 2, **characterized in that** the locking device (6) is arranged in the rear region of the first panel (11), and **in that** the actuating element (64) has a push button (641) which corresponds to the front end (121) of the second panel (12), the push button (641) protruding out of the locking device (6) to a greater extent in the locked position of the locking device (6) than in the unlocked position.

4. Multi-section movable loading floor according to one of the preceding claims, **characterized in that** the locking device (6) is displaced into the locked position by means of at least one elastic element (65).

5. Multi-section movable loading floor according to one of the preceding claims, **characterized in that** the locking device (6) can be unlocked by the user.

6. Multi-section movable loading floor according to one of the preceding claims, **characterized in that** the actuating element (64) is movable in a direction running parallel to the displacement of the loading floor (1).

7. Multi-section movable loading floor according to one of the preceding claims, **characterized in that** the locking device (6) has a first stud (631) which is movable in the vertical direction to the direction of movement of the loading floor (1), and **in that** the guide (2, 2') has at least one recess (26) for the first stud (631).

8. Multi-section movable loading floor according to Claim 7, **characterized in that** the guide (2, 2') has a horizontal first groove (24) for the first stud (631), the recess (26) being formed in the side wall of said groove.

9. Multi-section movable loading floor according to either of Claims 7 and 8, **characterized in that** the end of the first stud (631) of the locking device has a bevel (633), and **in that** the recess (26) has a corresponding slope (27), the first stud (631) at least partially projecting into the recess (26) in the unlocked position of the locking device (6).

10. Multi-section movable loading floor according to one of the preceding claims, **characterized in that** the front region of the first panel (11) has at least one second stud (5), and **in that** the guide (2, 2') horizontally has a second groove (22) for the second stud (5).

11. Multi-section movable loading floor according to Claims 8 and 10, **characterized in that** the rear part of the first groove (24) has a vertical inlet opening (25) for the first stud (631), and the rear part of the second groove (22) has a vertical inlet opening (23) for the second stud (5), the second stud (5) being longer and/or wider than the first stud (631), and **in that** the inlet openings (23, 25) of the first and second grooves correspond to said different dimensions.

12. Multi-section movable loading floor according to one of the preceding claims, **characterized in that** the locking device (6) for the first floor panel (11) is fastened movably in the vertical direction to the direction of movement of the loading floor (1), the extent of movement of said locking device being restricted, and the guide (2, 2') having a third longitudinal groove (210) at least along the first groove (24), on the upper horizontal surface (21) thereof, and **in that** the locking device (6) has at least one projection (68) which corresponds to the third groove (210).

13. Multi-section movable loading floor according to Claim 12, **characterized in that** the third groove (210) extends from the inlet opening (23) of the second groove (22) in the direction of the inlet opening (25) of the first groove (24), wherein the lower side of the second stud (5) has a projection (51) which corresponds to the third groove (210).

14. Multi-section movable loading floor according to one of the preceding claims, **characterized in that** a third panel (13) is fastened pivotably to the second panel (12) by means of a hinge (32), and **in that** the guide (2, 2') has at least one vertical recess (211) for the rear end of the third panel (13).

15. Multi-section movable loading floor according to Claim 14, **characterized in that** the guide (2, 2') has a number of recesses (26), which are at a distance from one another, for the first stud (631), and an equal number of recesses (211), which are at a distance from one another, for the rear end of the third panel (13).

## Revendications

1. Plancher de chargement déplaçable en plusieurs parties, en particulier plancher de chargement dans le coffre à bagages d'un véhicule automobile léger, qui peut être déplacé dans un guide (2, 2') disposé dans le coffre à bagages et qui comprend au moins deux plaques de plancher (11, 12) qui sont reliées de manière pivotante au moyen d'une première charnière (31), **caractérisé en ce que** la première plaque (11) présente au moins un dispositif de verrouillage (6) qui peut être déplacé entre une position verrouillée, dans laquelle le dispositif de verrouillage (6) bloque la première plaque (11) contre un déplacement dans le guide (2, 2'), et une position déverrouillée, dans laquelle le dispositif de verrouillage (6) permet le déplacement de la première plaque dans le guide (2, 2'), le dispositif de verrouillage (6) étant déplacé par un élément d'actionnement (64) en fonction de l'angle de pivotement de la deuxième plaque (12) par rapport à la première plaque (11).

2. Plancher de chargement déplaçable en plusieurs parties selon la revendication 1, **caractérisé en ce que** dans le cas d'un angle de pivotement de 180°, le dispositif de verrouillage (6) est dans une position déverrouillée et dans le cas d'un angle de pivotement de 90°, le dispositif de verrouillage est dans la position verrouillée.

3. Plancher de chargement déplaçable en plusieurs parties selon la revendication 1 ou 2, **caractérisé en ce que** le dispositif de verrouillage (6) est disposé dans la région arrière de la première plaque (11), et **en ce que** l'élément d'actionnement (64) présente un bouton-poussoir (641) qui correspond à l'extrémité avant (121) de la deuxième plaque (12), le bouton-poussoir (641) dépassant dans la position verrouillée du dispositif de verrouillage (6) hors du dispositif de verrouillage (6) plus que dans la position déverrouillée.

4. Plancher de chargement déplaçable en plusieurs parties selon l'une quelconque des revendications précédentes, **caractérisé en ce que** le dispositif de verrouillage (6) est déplacé dans la position verrouillée par au moins un élément élastique (65).

5. Plancher de chargement déplaçable en plusieurs parties selon l'une quelconque des revendications précédentes, **caractérisé en ce que** le dispositif de verrouillage (6) peut être déverrouillé par l'utilisateur.

6. Plancher de chargement déplaçable en plusieurs parties selon l'une quelconque des revendications précédentes, **caractérisé en ce que** l'élément d'actionnement (64) peut être déplacé dans une direction s'étendant parallèlement au déplacement du plancher de chargement (1).

7. Plancher de chargement déplaçable en plusieurs parties selon l'une quelconque des revendications précédentes, **caractérisé en ce que** le dispositif de verrouillage (6) présente un premier tourillon (631), qui est déplaçable dans la direction perpendiculaire par rapport à la direction de déplacement du plancher de chargement (1), et **en ce que** le guide (2, 2') présente au moins un évidement (26) pour le premier tourillon (631).

8. Plancher de chargement déplaçable en plusieurs parties selon la revendication 7, **caractérisé en ce que** le guide (2, 2') présente une première rainure horizontale (24) pour le premier tourillon (631), l'évidement (26) étant réalisé dans sa paroi latérale.

9. Plancher de chargement déplaçable en plusieurs parties selon l'une quelconque des revendications 7 ou 8, **caractérisé en ce que** l'extrémité du premier tourillon (631) du dispositif de verrouillage présente un biseautage (633) et **en ce que** l'évidement (26) présente un biseau correspondant (27), le premier tourillon (631) faisant saillie au moins en partie dans l'évidement (26) dans la position déverrouillée du dispositif de verrouillage (6).

10. Plancher de chargement déplaçable en plusieurs parties selon l'une quelconque des revendications précédentes, **caractérisé en ce que** la première plaque (11) présente dans sa région avant au moins un deuxième tourillon (5) et **en ce que** le guide (2, 2') présente horizontalement une deuxième rainure (22) pour le deuxième tourillon (5).

11. Plancher de chargement déplaçable en plusieurs parties selon les revendications 8 et 10, **caractérisé en ce que** la première rainure (24) présente dans sa partie arrière une ouverture d'entrée verticale (25) pour le premier tourillon (631), et la deuxième rainure (22) présente dans sa partie arrière une ouverture d'entrée verticale (23) pour le deuxième tourillon (5), le deuxième tourillon (5) présentant une plus grande longueur et/ou une plus grande largeur que le premier tourillon (631), et **en ce que** les ouvertures d'entrée (23, 25) de la première et de la deuxième rainure correspondent à ces dimensions différentes.

12. Plancher de chargement déplaçable en plusieurs parties selon l'une quelconque des revendications précédentes, **caractérisé en ce que** le dispositif de verrouillage (6) est fixé par rapport à la première plaque de plancher (11) de manière déplaçable dans la direction perpendiculaire à la direction de déplacement du plancher de chargement (1), l'ampleur de son déplacement étant limitée et le guide (2, 2') présentant au moins le long de la première rainure (24), sur sa surface horizontale supérieure (21), une troisième rainure longitudinale (210), et **en ce que** le dispositif de verrouillage (6) présente au moins une saillie (68) qui correspond à la troisième rainure (210).

13. Plancher de chargement déplaçable en plusieurs parties selon la revendication 12, **caractérisé en ce que** la troisième rainure (210) s'étend depuis l'ouverture d'entrée (23) de la deuxième rainure (22) dans la direction de l'ouverture d'entrée (25) de la première rainure (24), le deuxième tourillon (5) présentant sur son côté inférieur une saillie (51) qui correspond à la troisième rainure (210).

14. Plancher de chargement déplaçable en plusieurs parties selon l'une quelconque des revendications précédentes, **caractérisé en ce qu'**une troisième plaque (13) est fixée de manière pivotante par rapport à la deuxième plaque (12) au moyen d'une charnière (32), et **en ce que** le guide (2, 2') présente au moins un évidement vertical (211) pour l'extrémité arrière de la troisième plaque (13).

15. Plancher de chargement déplaçable en plusieurs parties selon la revendication 14, **caractérisé en ce que** le guide (2, 2') présente une pluralité d'évidements (26) éloignés les uns des autres pour le premier tourillon (631) et un nombre identique d'évidements (211) éloignés les uns des autres pour l'extrémité arrière de la troisième plaque (13).
